# EUROPÄISCHE PATENTSCHRIFT

(11) **EP 0 645 124 B1**
(45) Veröffentlichungstag und Bekanntmachung des Hinweises auf die Patenterteilung: **03.12.1997**
(21) Anmeldenummer: 94113615.2
(22) Anmeldetag: 31.08.1994
(51) Int. Cl.: A61C 5/06, A61M 5/315

(54) **Spritze zum dosierten Abgeben von viskosen Werkstoffen, insbesondere von dentalen Werkstoffen**
Syringe for dosing viscous substances, in particular for dental substances
Seringue de dosage de substances visqueuses, en particulier de substances dentaires

(30) Priorität: 23.09.1993 DE 4332307
(43) Veröffentlichungstag der Anmeldung: 29.03.1995
(73) Patentinhaber: HERAEUS KULZER GMBH, D-61273 Wehrheim (DE)
(72) Erfinder: Eykmann, Rudolf, D-61273 Wehrheim (DE); Fritze, Dr. Joachim, D-61381 Friedrichsdorf (DE); Uhrig, Birgit, D-61276 Neu-Anspach (DE); Schödel, Dr. Dieter, D-65193 Wiesbaden (DE); Burckhardt, Holger, D-60596 Frankfurt/Main (DE)
(74) Vertreter: Grimm, Ekkehard, Dipl.-Phys.

(56) Entgegenhaltungen:
- EP-A- 0 225 439
- DE-A- 4 200 044

## Beschreibung

Die vorliegende Erfindung betrifft eine Spritze zum dosierten Abgeben von viskosen Werkstoffen, insbesondere von dentalen Werkstoffen, mit einer den Werkstoff aufnehmenden Patrone, in die von deren einem Ende aus ein Drehkolben eintaucht, wobei der Drehkolben zumindest teilweise als Gewindestange ausgebildet ist und an seinem Eintauchende gegen einen Stopfen drückt und wobei dessen Gewindestange in einem Lager verschiebbar gehalten ist.

Eine solche Spritze ist beispielsweise aus der Produktinformation der Heraeus Kulzer GmbH "Charisma-Inlays - Gewinn durch Perfektion und Ästhetik" (31292/D 125 sK dt./WPR 12 12 200) oder aus der DE-A-42 00 044 bekannt. Diese Spritzen, in denen unter dem Produktnamen "Charisma" (Charisma ist eingetragenes Warenzeichen der Heraeus Kulzer GmbH) vertriebene, viskose Dentalwerkstoffe abgefüllt werden, weisen eine Patrone auf, in die der Dentalwerkstoff eingefüllt wird. Diese Patrone ist an ihrem Austragsende im Außenumfang verjüngt ausgebildet, auf das eine Verschlußkappe aufgesetzt wird. In das dem Austragsende gegenüberliegende Ende der Patrone taucht ein Drehkolben ein (Eintauchende), der sich an seinem Ende in einen hülsenförmigen Stopfen einlegt, der seinerseits gegen den in der Patrone abgefüllten viskosen Werkstoff anliegt. Der Drehkolben ist mit einem Gewinde versehen, das in einem Lager in Form einer Mutter geführt ist. Diese Mutter ist als etwa rechteckige Platte mit einer zentrischen Gewindebohrung ausgeführt, wobei diese Mutter in einen Schlitz am Eintauchende der Patrone eingeschoben ist, so daß sie gegenüber dem in die Gewindebohrung eingeschraubten Drehkolben gegen eine Verdrehung relativ zu der Patrone gesichert ist. Um die Dentalwerkstoffe aus der Patrone auszutragen, wird die Verschlußkappe der Patrone entfernt und der Drehkolben, der an seinem Ende ein Griffteil besitzt, in die Patrone hineingedreht, so daß der Stopfen zum Austragsende der Patrone hin verschoben wird. Um den Stopfen, der den Werkstoff mit Druck beaufschlagt, bei Nichtgebrauch der Spritze zu entlasten, wird der Drehkolben wieder aus der Patrone in umgekehrter Drehrichtung zurückgedreht.

Die vorstehend beschriebenen Spritzen haben sich im Einsatz über Jahre gut bewährt. Es hat sich allerdings bei der Handhabung der Spritzen herausgestellt, daß für sehr unterschiedliche Werkstoffe, insbesondere hinsichtlich ihrer Viskosität und der jeweils auszutragenden Menge, unterschiedliche Vorschubgeschwindigkeiten der Gewindestange erforderlich sein können. Dies kann zum einen durch die Drehgeschwindigkeit, mit der der Drehkolben in dem Lager durch dessen Drehung vorgeschoben wird, erzielt werden, zum anderen können herstellerseitig Kolben mit Gewinden unterschiedlicher Steigung bereitgestellt werden, die in entsprechenden Lagerteilen verdreht werden, um die unterschiedlichen Vorschub- und damit Austragsgeschwindigkeiten zu erzielen.

Weitere Spritzen zum Austragen von viskosen Werkstoffen sind beispielsweise aus der US-PS 3,581,399, der DE-A1 42 00 044, dem DE-GM 78 37 177 und der US-PS 3,900,954 bekannt.

Jede der vorgenannten Spritzen und jedes Spritzensystem besitzt spezifische Merkmale und Eigenschaften. So gibt beispelsweise die US-PS 3,581,399 eine Spritze mit auswechselbaren Spitzen oder Düsen an, die beispielsweise in Form eines dünnen Kanals gebogen verlaufen, um das Dentalmaterial gezielt an eine Stelle an einem Zahn zu bringen, der bearbeitet werden soll.

Die DE-A1 42 00 044 offenbart eine Dentalpatrone zum Ausgeben von Mehrkomponentenmaterial für Zahnfüllungen, die in eine sogenannte Hebelspritze eingesetzt wird. Diese Hebelspritze besitzt einen pistolenartigen Adapter, in den die Patrone mit dem Dentalmaterial eingesetzt wird.

Das DE-GM 78 37 177 gibt eine Spritze zur Direktapplikation von Zahnfüllungsmaterial an, wobei der das Füllungsmaterial aufnehmende Behälter als faltbare Kapsel ausgebildet ist, die in die Patrone eingesetzt wird.

Die US-PS 3,900,954 gibt eine Spritze an, die ähnlich der Spritze nach der US-PS 3,581,399 ist; in eine Patrone wird ein Kolben unter Reibung eingesetzt, der eine vorstehende Spitze aufweist, die sich in ein hülsenförmiges Teil drückt, in dem sich das Dentalmaterial befindet. Das kleine, hülsenförmige Teil ist an das Ende der Patrone angesetzt und bildet gleichzeitig die Austragsspitze oder -düse für das Material.

Ausgehend von dem vorstehend beschriebenen Stand der Technik liegt der vorliegenden Erfindung die Aufgabe zugrunde, eine Spritze zum dosierten Abgeben von viskosen Werkstoffen, insbesondere von dentalen Werkstoffen, anzugeben, die sowohl das Austragen des viskosen Werkstoffs aus der Spritze, als auch den herstellerseitigen Zusammenbau bzw. die Befüllung der Spritze erleichtert.

Die vorstehende Aufgabe wird bei einer Spritze der eingangs erwähnten Art dadurch gelöst, daß das Lager mindestens einmal in axialer Richtung der Gewindestange in Lagerteile unterteilt ist, wobei die Lagerteile durch mindestens ein Spreizteil in radialer Richtung der Gewindestange auf Abstand zueinander und auf Abstand zu der Gewindestange gehalten sind und wobei die Lagerteile auf ihren der Gewindestange zugewandten Flächen Bereiche aufweisen, die gegen den Widerstand des mindestens einen Spreizteiles durch äußeren Druck in Eingriff mit der Gewindestange bringbar sind.

Durch die zwei Lagerteile, die unter Druck auf deren Außenseite in die Gewindestange eingreifen, ist es möglich, die Gewindestange schraubend gegen den Stopfen bzw. den viskosen Werkstoff zu verschieben und den Werkstoff aus dem Ende der Patrone herauszudrücken. Falls große Mengen des in der Patrone bevorrateten Werkstoffs ausgetragen werden sollen, wird die Kolben- bzw. Gewindestange in die Patrone eingedrückt, ohne daß die Spritze an den Lagerteilen von dem Benutzer erfaßt ist. Hierbei werden die Lagerteile in ihrer Ruhestellung, das heißt außerhalb des Eingriffs mit der Gewindestange, gehalten, so daß sich die Gewindestange in axialer Richtung der Patrone frei bewegen kann. Weiterhin bietet dieses Lager, dessen Lagerteile durch mindestens ein Spreizteil in radialer Richtung zu der Gewindestange auf Abstand zueinander und damit außerhalb des Eingriffs mit dem Gewinde der Gewindestange gehalten werden, den Vorteil, daß bei einer Applikation von insbesondere hochviskosen bzw. pastösen Werkstoffen durch Zusammendrücken der Lagerteile ein Eingriff mit der Gewindestange erfolgt und mit einer Drehbewegung des Drehkolbens Druck auf den Werkstoff ausgeübt wird, so daß hohe Kräfte mit einer leichten Drehbewegung aufgebracht werden können. Beim Entlasten der Lagerteile des geteilten Lagers öffnen sich die Lagerteile und die Gewindestange bzw. das Gewinde wird sofort freigegeben. Um den Druck völlig von dem Stopfen bzw. von dem Werkstoff in der Patrone wegzunehmen, kann die Gewindestange dann frei aus dem Lager bzw. der Patrone herausgezogen werden. Weiterhin besteht die Möglichkeit, für einen Satz von Patronen jeweils einen Drehkolben bereitzustellen, der jeweils in die spezielle Patrone, die verwendet wird, eingesetzt und nach dem Entleeren oder bei einem Zwischenlagern der Patrone wieder herausgenommen werden kann. Bei erneuter Benutzung des Drehkolbens ist durch die geöffneten bzw. gespreizten Lagerteile ein schneller Vorschub des Drehkolbens möglich, bis dessen Ende an dem Stopfen zur Anlage gelangt, wobei dann, für ein leichtes Ausbringen des dentalen Werkstoffs ohne großen Kraftaufwand, die Lagerteile in Eingriff mit dem Gewinde der Gewindestange gebracht werden können und der Drehkolben gedreht wird.

Um die beiden Gewindeteile auf Abstand zueinander und damit auf Abstand zu der Gewindestange zu halten, besitzen diese vorzugsweise Spreizteile in Form von elastisch verformbaren Stegen, die gegen die Richtung, mit der sie in den Eingriff mit der Gewindestange gedrückt werden, unter Spannung gehalten werden. Diese Spreizteile oder Stege können beispielsweise in entsprechenden Nuten eingreifen, die in dem Spritzenkörper bzw. in der Patrone ausgebildet sind. In einer einfachen Ausgestaltung der Lagerteile sind das Spreizteil bzw. die Spreizteile an mindestens einer von zwei sich gegenüberliegenden Flächen zweier sich gegenüberliegender Lagerteile gebildet; solche Spreizteile oder Stege, die mit einem Lagerteil verbunden sind, drücken dann, entsprechend vorgespannt, gegen eine Fläche des gegenüberliegenden Lagerteils, so daß diese beiden Lagerteile über die Stege auf Abstand zueinander gehalten werden. In einer weiteren Ausgestaltung der Lagerteile sind das oder die Spreizteile eines Lagerteils mit den gegenüberliegenden Flächen des anderen Lagerteils fest verbunden, so daß sie die beiden Lagerteile auf Abstand halten. Bevorzugt wird die Spritze mit zwei Lagerteilen versehen, die an radial gegenüberliegenden Seiten der Gewindestange gebildet sind. In einem einfachen, konstruktiven Aufbau der Spreizteile oder der Stege sind diese an den Stirnseiten der Lagerteile angeordnet, das heißt an den Seiten, die in Richtung der Achse des Drehkolbens ausgerichtet sind. Hierbei kann es sich um kurze, zapfenförmige Fortsätze handeln, die in Drückrichtung der Lagerteile zu der Gewindestange hin schräg verlaufend angeordnet sind und die vorzugsweise in entsprechenden Nuten, die der Patrone ortsfest zugeordnet sind, eingreifen, und zwar derart, daß sie sich, federnd in den Nuten gehalten, bewegen können, um dem Druck durch den Benutzer auf die Lagerteile nachzugeben.

Da die Lagerteile eine gewisse Ausdehnung in axialer Richtung des Drehkolbens bzw. der Gewindestange haben sollten, um eine ausreichende Griff-Fläche zu bilden, damit der Benutzer diese Lagerteile bzw. Griff-Flächen ergreifen kann, ist für eine gleichmäßige Lagerung jedes Lagerteils die Unterteilung der Spreizteile in axialer Richtung in zwei Gruppen an jedem Lagerteil dienlich, die mit Abstand zueinander in axialer Richtung angeordnet sind und die demzufolge jedes Lagerteil an dem oberen Bereich und an dem unteren Bereich federnd abstützen.

Um einerseits ein exaktes Eingreifen der Lagerteile in die Gewindestange unter Aufbringung eines Drucks von außen zu gewährleisten, um andererseits wiederum ein Lösen der Lagerteile aus dem Eingriff mit der Gewindestange sicherzustellen, werden die Lagerteile in radialer Richtung zu der Gewindestange verschiebbar in Führungen geführt. Solche Führungen können beispielsweise in Form von Nut-Führungen ausgebildet sein, in die Führungsteile eingreifen, wobei sowohl die Nuten als auch die Führungsteile den Lagerteilen zugeordnet werden können.

Um eine kostengünstige Spritze bzw. ein kostengünstiges Spritzensystem bereitstellen zu können, werden in einer besonders vorteilhaften Ausgestaltung der Spritze die Lagerteile des Lagers einem Adapterteil zugeordnet, in dem die Patrone und der Drehkolben derart einsetzbar sind, daß die Gewindestange zwischen den Lagerteilen hindurchgeführt ist. Das Adapterteil bildet in dieser Ausgestaltung zusammen mit den Lagerteilen eine Einheit, in die wahlweise unterschiedliche Patronen eingebaut werden können. Der Drehkolben kann hierbei entweder der einzusetzenden Patrone oder dem Adapterteil zugeordnet werden, oder der Drehkolben bildet ein gesondertes Bauteil, das individuell über das Adapterteil in eine darin eingesetzte Patrone so eingeführt werden kann, daß sich das Ende des Drehkolbens an den Stopfen in der Patrone anlegt. Um die Patrone, die in das Adapterteil eingesetzt wird, gegen eine axiale Verschiebung zu sichern, sollte diese in dem Adapterteil verriegelt werden. Eine einfache, aber wirkungsvolle konstruktive Ausgestaltung der Verriegelung ist durch einen Bajonettverschluß an demjenigen Ende der Patrone, in das der Drehkolben eintaucht, gegeben. Hierbei reicht es auch aus, daß die Patrone nur über eine geringe Länge an ihrem Befestigungsende geführt ist und der übrige Teil der Patrone über die Unterseite des Adapterteils vorsteht. Um die Patrone in dem Adapterteil über ihre Länge zu führen bzw. in ihrer Lage zu sichern, hat es sich als vorteilhaft herausgestellt, die Patrone in dem Adapterteil an dessen dem Eintauchende abgewandten Ende in einer Führung zu führen und zu lagern. Dadurch wird die Ptrone gegen ein seitliches Verkippen ausreichend gesichert.

Ein einfacher konstruktiver Aufbau des Adapterteils ist dadurch gegeben, daß das Adapterteil an dem Patronenende, in das der Drehkolben eintaucht, durch eine stirnseitige Ringkappe verschlossen ist. Diese Ringkappe kann beim Zusammenbau des Adapterteils abgenommen werden, so daß von der Stirnseite aus die Lagerteile in das Gehäuse des Adapterteils eingesetzt werden können. Anschließend wird die stirnseitige Ringkappe aufgeschoben. Weiterhin kann eine solche Ringkappe dazu dienen, ein aus zwei Hälften zusammengesetztes Adaptergehäuse zu verbinden. Eine solche Ausbildung des Adapterteils bzw. des Gehäuses des Adapterteils aus zwei Halbschalen ist als bevorzugt anzusehen, insbesondere auch dann, wenn die beiden Halbschalen identische Teile sind.

Die Lagerteile, die Gewindestange und die Teile des Adapterteils sollten vorzugsweise aus Polyoxymethylen (POM) hergestellt sein.

Die Patrone wird vorzugsweise aus Polypropylen hergestellt. Im Gegensatz zu POM ist Polypropylen relativ weich, so daß sich bei gutem Paßsitz die Patrone leicht in das Adapterteil einsetzen läßt.

In einer weiteren bevorzugten Ausführungsform wird in die Patrone als Innenstopfen ein derartiger Stopfen eingesetzt, der eine Membranfläche aufweist, gegen die das Ende des Drehkolbens anliegt. Diese Membranfläche ist gegen die Vorschubrichtung des Drehkolbens, in der das Material aus der Patrone ausgetragen wird, in entlastetem Zustand vorgespannt. Falls nun Material aus der Patrone ausgetragen ist, wird der Drehkolben zurückgedreht und der Druck von dem Stopfen bzw. der Membranfläche genommen. Die Membranfläche tendiert dann dazu, in ihre vorgespannte Stellung zurückzukehren, wodurch im Bereich des Materials ein Unterdruck erzeugt und das Material von der Austrittsdüse entfernt wird, so daß kein Material aus der Austrittsdüse ausläuft. Insbesondere in Verbindung mit dem geteilten Lager zur Lagerung der Gewindestange werden nach einem Austrag des Materials die Lagerteile freigegeben, so daß sie unter der Kraft der Spreizteile aus dem Eintritt mit dem Gewinde der Gewindestange gelangen und unmittelbar die Gewindestange frei geben. Nach einer solchen Freigabe wird durch die Membranfläche die Kolbenstange zurückgedrückt.

Weitere Vorteile und Merkmale der Erfindung ergeben sich aus der nachfolgenden Beschreibung von Ausführungsbeispielen anhand der Zeichnung. In der Zeichnung zeigt:
- Figur 1: eine seitliche Draufsicht auf eine Spritze mit Adapterteil und darin eingesetzter Patrone,
- Figur 2: die Spritze nach Figur 1 in einer um 90° um deren Achse gedrehten Ansicht,
- Figur 3: einen Längsschnitt eines Adapterteils ähnlich der Ausführungsform nach den Figuren 1 und 2,
- Figur 4: eine Draufsicht auf das Adapterteil der Figur 3 aus Richtung des Sichtpfeils III in Figur 3,
- Figur 5: einen Längsschnitt einer weiteren Ausführungsform eines Adapterteils,
- Figur 6: einen Schnitt entlang der Schnittlinie VI-VI in Figur 5.
- Figur 7: eine weitere Ausführungsform eines Adapterteils in einer teilweise aufgebrochenen Schnittdarstellung mit eingesetztem Drehkolben,
- Figur 8: eine Darstellung der Ausführungsform nach Figur 7 entlang der Längsachse,
- Figur 9: eine Ansicht auf die Stirnseite eines Lagerteils, das in das Adapterteil nach Figur 7 eingesetzt wird,
- Figur 10: eine Draufsicht auf das Lagerteil der Figur 9 aus Richtung des Sichtpfeils IX in Figur 9, und
- Figur 11: einen Schnitt entlang der Schnittlinie IX-IX in Figur 9

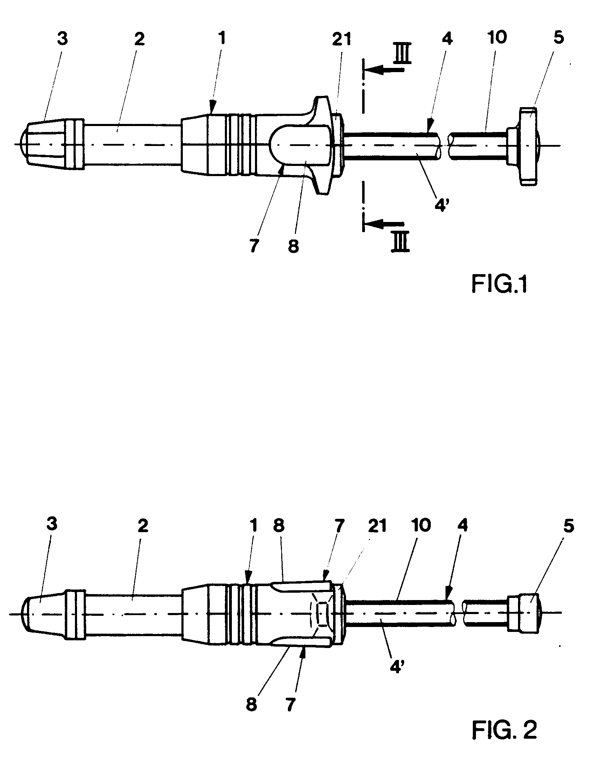

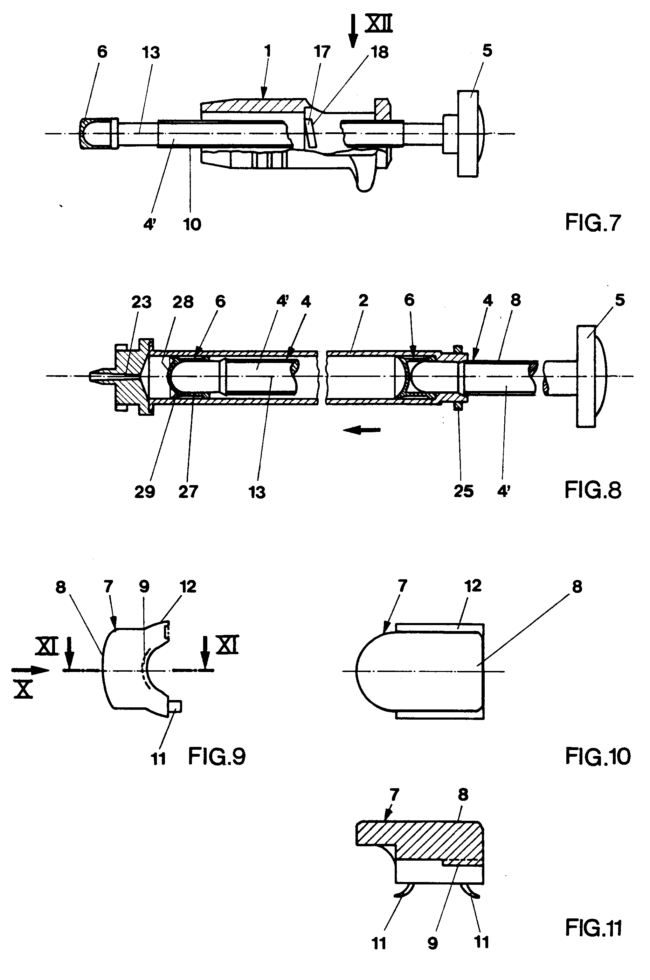

Die Spritze zum dosierten Abgeben von viskosen Werkstoffen, wie sie in den Figuren 1 und 2 dargestellt ist, weist ein Adapterteil 1 auf, in das eine langgestreckte Patrone 2 eingesetzt ist, die an ihrem freien, aus dem Adapterteil 1 vorstehenden Ende mit einer Verschlußkappe 3 verschlossen ist. Die Patrone 2 ist mit einem auszutragenden, zu verarbeitenden Werkstoff befüllt. In das eine Ende des Adapterteils 1 tritt ein Drehkolben 4, der teilweise als Gewindestange 4' ausgebildet ist, ein, der einen Griff 5 an seinem freien Ende besitzt. Das Eintauchende des Drehkolbens 4 drückt gegen einen in den Figuren 1 und 2 nicht zu sehenden Stopfen 6, wie er allerdings in der Ausführungsform der Figuren 7 und 8 dargestellt ist. Die Gewindestange 4' des Drehkolbens 4 wird in dem Adapterteil 1 in einem durch zwei Lagerteile 7 gebildeten Lager gelagert. Diese Lagerteile 7, wie sie in den Figuren 9 bis 11 dargestellt sind, besitzen jeweils eine Griff-Fläche 8, die außen über das Adapterteil 1 geringfügig vorstehen und von dem Benutzer der Spritze einfach erfaßt werden können. An der Innenseite dieser Lagerteile 7 befindet sich jeweils ein Gewindeabschnitt 9, der dem Gewinde 10 der Gewindestange 4' zugeordnet ist. Da sich die beiden Lagerteile 7 in dem Adapterteil 1 gegenüberliegen, wie beispielsweise die Figur 2 zeigt, wird die Gewindestange 4' über die beiden sich gegenüberliegenden Gewindeabschnitte 9 der Lagerteile 7 zentriert geführt. In der Ausgangsstellung (bei Nichtgebrauch) werden die beiden Lagerteile 7 durch Spreizteile in Form von elastisch verformbaren Stegen 11, die sich in entsprechenden, nicht näher dargestellten Nuten in dem Adapterteil 1 abstützen, radial zu der Gewindestange 4' auf Abstand gehalten. Nach außen, d.h. in radialer Richtung zu der Gewindestange 4', werden die Lagerteile 7 durch verbreiterte Randstreifen 12 gehalten.

Um pastöses Material aus der Patrone 2 über die mit der Verschlußkappe 3 verschlossene Austrittsdüse 23 auszutragen, wird das Adapterteil 1 von dem Benutzer mit der einen Hand so erfaßt, daß die beiden Griff-Flächen 8 der Lagerteile 7 zwischen Daumen und Zeigefinger erfaßt und die beiden Lagerteile 7, gegen die radial nach außen wirkende Spannkraft der Stege 11, zusammengedrückt werden können, bis die jeweiligen Gewindeabschnitte 9 der Lagerteile 7 in das Gewinde 10 der Gewindestange 4' eingreifen. In dieser Stellung wird der Drehkolben 4 an dem Griff 5 gedreht, so daß er sich langsam in die Patrone 2 einschieben kann; hierbei drückt der Stopfen 6 gegen den Werkstoff, der dann dosiert aus dem Austragsdüse 23 der Patrone 2 austritt.

Nachdem eine erwünschte Menge an Material ausgetragen ist, werden die Lagerteile 7 losgelassen, so daß sie aufgrund der Wirkung der Stege 11 radial nach außen aus dem Eingriff mit der Gewindestange 4' gedrückt werden. Unmittelbar mit dem Lösen der Gewindeabschnitte 9 aus dem Gewinde 10 der Gewindestange 4' entspannt sich das über den Stopfen 6 in der Patrone 2 unter Druck stehende Material, so daß ein weiteres Austreten des Werkstoffes verhindert wird. Um den Werkstoff noch weiter zu entspannen bzw. das in der Austrittsöffnung der Patrone 2 befindliche Material zu entfernen, kann die Gewindestange 4' aus der Patrone 2 zurückgezogen werden, wodurch in der Patrone ein Unterdruck entsteht, aufgrund dessen das in der Austrittsöffnung der Austrittsdüse 23 befindliche Material in die Patrone 2 eingezogen wird. Nach einem Verschluß der Patrone 2 mittels der Verschlußkappe 3 kann die Spritze bis zum weiteren Gebrauch gelagert werden, wobei der gesamte Druck, der beim Austragen des Materials über die Gewindestange 4' aufgebracht wird, von dem Material weggenommen wird. Darüberhinaus steht das Adapterteil 1 dann zur Aufnahme einer anderen Patrone gegebenenfalls mit anderem Material, das appliziert werden soll, zur Verfügung, indem die gebrauchte Patrone 2 aus dem Adapterteil 1 entnommen wird. Insbesondere im Bereich der Dentalmedizin und Dentaltechnik ist ein solcher Austausch der Patrone 2 von Vorteil, da im Dentalbereich die unterschiedlichsten Materialien von Patient zu Patient bzw. von Werkstück zu Werkstück, auch hinsichtlich der unterschiedlichsten Materialfarben, verwendet werden. Es reicht dann aus, ein einziges Adapterteil 1 bereitzustellen, in das dann jeweils die unterschiedlichen Patronen 2 eingesetzt werden. Falls eine bereits teilweise entleerte Patrone 2, bei der der Stopfen 6 bereits um eine bestimmte Länge in die Patrone 2 eingedrückt ist, in das Adapterteil 1 eingesetzt wird, kann der Drehkolben 4 durch den Benutzer, wenn er in der Ausgangsstellung des Adapterteils 1 nicht mit den Gewindeabschnitten 9 der Lagerteile 7 in Eingriff steht, vorgeschoben werden, bis das Ende des Drehkolbens 4 an dem Stopfen 6 zur Anlage kommt. Anschließend werden die beiden Lagerteile 7 über die Griff-Flächen 8 zusammengedrückt, bis die Gewindeabschnitte 9 in das Gewinde 10 der Gewindestange 4' eingreifen. Danach kann durch Drehung des Drehkolbens 4 an dem Griff 5 ein weiterer dosierter Austrag des Dentalmaterials ohne großen Kraftaufwand erfolgen.

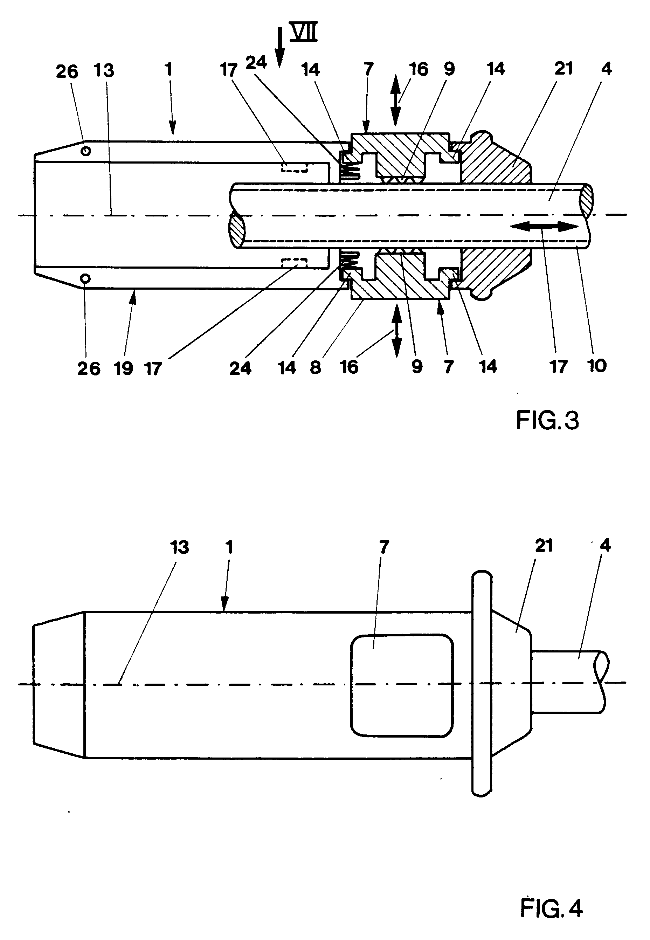

Die Ausführungsform des Adapterteils 1 nach den Figuren 3 und 4 unterscheidet sich gegenüber der Ausführungsform nach den Figuren 1 und 2 dadurch, daß die Lagerteile eine quadratische Griff-Fläche 8 besitzen. Darüberhinaus sind die Lagerteile 7 jeweils an ihren in Richtung der Achse 13 der Gewindestange 4' verlaufenden Richtung durch Stege 14 in axialer Richtung gehalten. Diese Stege 14 liegen an Vorsprüngen des Gehäuses des Adapterteils 1 an und können sich jeweils in Richtung der Doppelpfeile 16 in Figur 3 axial zu der Gewindestange 4' hin und von der Gewindestange 4' weg bewegen. Die Figur 3 zeigt die Ruhe- stellung der Lagerteile 7, in der deren Gewindeabschnitte 9 nicht mit dem Gewinde 10 der Gewindestange 4' in Eingriff stehen. Die Lagerteile 7 werden in dieser Stellung in dieser Ausführung beispielsweise durch die angedeuteten Federelemente 24 gehalten, die geeignet gegengelagert sind. Es können aber auch stegartige Spreizteile eingesetzt werden, die bevorzugt verwendet werden. Wie ersichtlich ist, kann in dieser Stellung die Gewindestange 4' frei, d.h. ohne daß diese um ihre Achse 13 gedreht wird, in Richtung des Doppelpfeils 16 in das Adapterteil 1 hineingeschoben bzw. aus dem Adapterteil 1 herausgezogen werden.

Die Patrone 2 wird auswechselbar in dem Adapterteil 1 mittels einer Art Bajonettverschluß verriegelt. Hierbei sind an den Innenflächen des Adapterteils 1, und zwar an dem der offenen Seite des Adapterteils 1 abgewandten Ende, Vorsprünge 17 vorgesehen, die in den Figuren 3, 5 und 7 in den verschiedenen Ausführungen der Spitze zu sehen sind. Diese Vorsprünge 17, beispielsweise in Form von kurzen Stegteilen, hintergreifen entsprechende Stegteile 25 (siehe Figur 8) an dem Ende einer einzusetzenden Patrone 2, indem nach dem Einsetzen der Patrone 2 in das Adapterteil 1 die Patrone 2 und das Adapterteil 1 radial gegeneinander verdreht werden. Um einen festen Sitz der Patrone 2 in dem Adapterteil 1 zu erzielen, ist es von Vorteil, die Vorsprünge 17 mit einer schrägen Fläche auszustatten oder die Vorsprünge unter einem Winkel zu einer Ebene, die senkrecht auf der Achse 13 der Gewindestange 4' steht, auszurichten, wobei diese schrägen Flächen die Stege an der Patrone 2 hintergreifen (Bajonettverschluß). Solche Vorsprünge 17 mit schrägen Flächen 18 sind in den Figuren 3, 5 und 7 zu sehen.

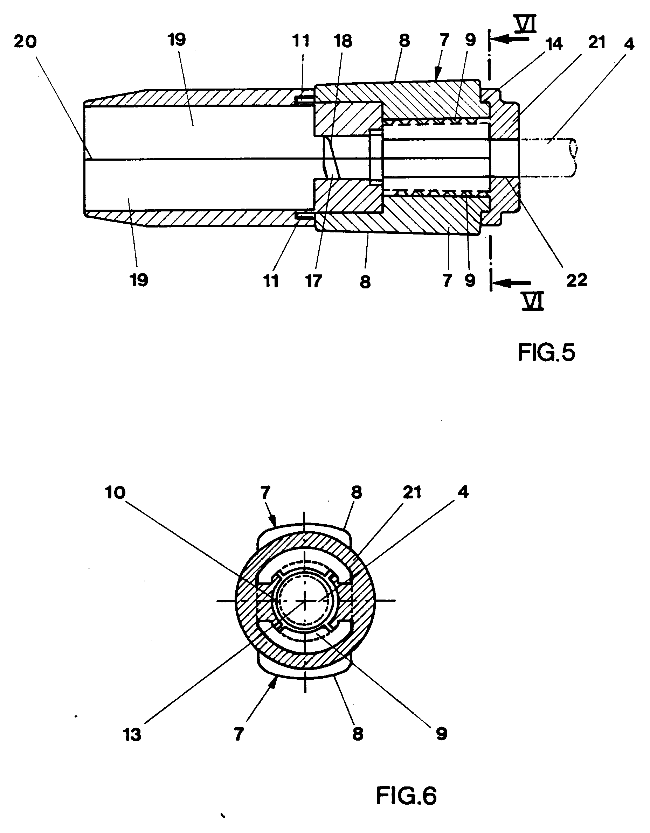

Im Hinblick auf einen einfachen Aufbau ist das Adapterteil 1 aus zwei identischen Halbschalen 19 zusammengesetzt, die im Bereich der Trennebene 20, in der auch die Achse 13 der Gewindestange 4' verläuft, flächig aufeinanderliegen. An dem einen Ende, aus dem die Patrone 2 vorsteht, werden die beiden Halbschalen 19 des Adapterteils 1 durch ineinandergreifende Verbindungsteile 26 (siehe Figur 3) miteinander verbunden, und an dem anderen Ende, dem Eintauchende der Gewindestange 4' in das Adapterteil 1, werden sie über eine stirnseitige Ringkappe 21 zusammengehalten. Bei den Verbindungsteilen 26 kann es sich um Noppen handeln, die in entsprechenden Bohrungen einrasten. Die Ringkappe 21 übergreift Teile der beiden Halbschalen 19, wie die Figuren 6 und 8 zeigen. Diese Ringkappe 21 kann so ausgestaltet sein, daß sie nach ihrem Aufklemmen auf die Halbschalen 19 dort dauerhaft verbleibt. Hierfür sind eine umlaufende Nut an den Halbschalen 19 und/oder der Ringkappe 21 einerseits und ein umlaufender Steg an den Halbschalen 19 oder der Ringkappe 21 andererseits, die ineinandergreifen, möglich. Die Durchtrittsöffnung 22 der Ringkappe 21 für den Drehkolben 4 ist so dimensioniert, daß sie nur geringfügig größer als der Außendurchmesser der Gewindestange 4' ist und auf diese Weise eine Führung der Gewindestange 4' bildet, insbesondere dann, wenn die beiden Lagerteile 7 nicht mit ihrem Gewindeabschnitt 9 in das Gewinde 10 der Gewindestange 4' eingreifen. Die beiden Lagerteile 7, die ebenfalls identische Teile sind, werden bei dem Zusammenbau des Adapterteils 1 vor dem Aufklemmen der Ringkappe 21 von der Innenseite in die Halbschalen 19 eingelegt.

In Figur 8 ist eine Schnittdarstellung durch die Patrone 2 gezeigt, die in das Adapterteil 1 der Figur 7 eingesetzt wird. In dieser Patrone 2 ist der Stopfen 6 in zwei verschiedenen Stellungen gezeigt, und zwar in einer rechts dargestellten Stellung nach dem Befüllen einer Patrone 2 mit viskosem Dentalmaterial und in einer links dargestellten Stellung, in der der Stopfen 6 durch den Drehkolben 4' nach vorne verschoben ist. Bei dem Stopfen 6 handelt es sich um einen becherförmigen Stopfen mit Seitenwänden 27 und einer als Membranfläche 28 ausgebildeten Bodenfläche. Die Membranfläche 28 ist in der Ruhestellung des Stopfens 6 zu dem Ende des Drehkolbens 4 hin gewölbt bzw. vorgespannt. Beim Verschieben des Stopfens 6 nach vorne zu dern Austrittsdüse 23 hin drückt das Ende der Gewindestange 4' gegen die Membranfläche 28, die der Rundung des Endes des Drehkolbens 4 angepaßt ist. Beim Verschieben wird der Stopfen 6 durch eine umlaufende Dichtlippe 29 gegenüber der Innenwand der Patrone 2 abgedichtet. Nach dem eine gewünschte Menge an Material aus der Patrone 2 über die Austrittsdüse 23 abgegeben ist, werden vom Benutzer die Lagerteile 7 losgelassen, so daß diese aus dem Eingriff mit der Gewindestange 4' gelangen. In dieser gelösten Stellung kehrt die Membranfläche 28 wieder in ihre Ausgangsstellung zurück, in der sie zu dem Ende des Drehkolbens 4 hin gewölbt vorgespannt ist. Mit dem Zurückklappen oder -schwenken der Membranfläche 28 wird bereits in der Anfangsphase in der Patrone ein auf das Material einwirkender Unterdruck erzeugt, der das Material, das sich noch in der Austrittsdüse 23 befindet, in die Patrone 2 hineingezogen. Ein Nachlaufen oder ein Nachtropfen tritt dadurch nicht auf. Gerade durch die geteilten Lagerteile ist eine solche schnelle Freigabe der Gewindestange 4' nach Beendigung des Austrags des Materials möglich.

## Patentansprüche

1. Spritze zum dosierten Abgeben von viskosen Werkstoffen, insbesondere von dentalen Werkstoffen, mit einer den Werkstoff aufnehmenden Patrone (2), in die von deren einem Ende aus ein Drehkolben (4) eintaucht, wobei der Drehkolben zumindest teilweise als Gewindestange (4') ausgebildet ist und an seinem Eintauchende gegen einen Innen-Stopfen (6) drückt und wobei dessen Gewindestange in einem Lager verschiebbar gehalten ist, dadurch gekennzeichnet, daß das Lager mindestens einmal in axialer Richtung der Gewindestange (4') in Lagerteile (7) unterteilt ist, wobei die Lagerteile (7) durch mindestens ein Spreizteil (11) in radialer Richtung der Gewindestange (4') auf Abstand zueinander und auf Abstand zu der Gewindestange (4') gehalten sind und wobei die Lagerteile (7) auf ihren der Gewindestange (4') zugewandten Flächen Bereiche (9) aufweisen, die gegen den Widerstand des zumindest einen Spreizteiles (11) durch äußeren Druck in Eingriff mit der Gewindestange (4') bringbar sind.

2. Spritze nach Anspruch 1, dadurch gekennzeichnet, daß das Spreizteil durch mindestens einen elastisch verformbaren Steg (11) gebildet ist.

3. Spritze nach einem der Ansprüche 1 oder 2, dadurch gekennzeichnet, daß das Spreizteil (11) an mindestens einer zweier sich gegenüberliegender Flächen zweier gegenüberliegender Lagerteile (7) gebildet ist.

4. Spritze nach einem der Ansprüche 1 bis 3, dadurch gekennzeichnet, daß das Spreizteil (11) mit den gegenüberliegenden Flächen der Lagerteile (7) in Verbindung steht.

5. Spritze nach einem der Ansprüche 1 bis 4, dadurch gekennzeichnet, daß mindestens zwei Lagerteile (7) gebildet sind, die an radial gegenüberliegenden Seiten der Gewindestange (4') liegen.

6. Spritze nach einem der Ansprüche 1 bis 5, dadurch gekennzeichnet, daß das Spreizteil (11) an einer der Gewindestange (4') zugewandten Seite der Lagerteile (7) gebildet ist.

7. Spritze nach einem der Ansprüche 1 bis 6, dadurch gekennzeichnet, daß das Spreizteil (11) in Nuten an seinem Ende gehalten ist.

8. Spritze nach einem der Ansprüche 2 bis 7, dadurch gekennzeichnet, daß in axialer Richtung mindestens zwei Gruppen von Spreizteilen (11) jedem Lagerteil (7) zugeordnet und mit Abstand zueinander angeordnet sind.

9. Spritze nach einem der Ansprüche 1 bis 8, dadurch gekennzeichnet, daß die Lagerteile (7) in radialer Richtung verschiebbar in Führungen (14) geführt sind.

10. Spritze nach einem der Ansprüche 1 bis 9, dadurch gekennzeichnet, daß die Lagerteile (7) in einem Adapterteil (1) angeordnet sind, in dem die Patrone (2) und der Drehkolben (4) derart einsetzbar sind, daß die Gewindestange (4') zwischen den Lagerteilen (7) hindurchgeführt ist.

11. Spritze nach Anspruch 10, dadurch gekennzeichnet, daß die Patrone (2) in dem Adapterteil (1) gegen axiale Verschiebung verriegelt ist.

12. Spritze nach Anspruch 11, dadurch gekennzeichnet, daß die Patrone (2) mittels Bajonettverschluß (17) verriegelt ist.

13. Spritze nach Anspruch 12, dadurch gekennzeichnet, daß der eine Teil (17) des Bajonettverschlusses an dem Ende der Patrone (2), in das der Drehkolben (4) eintaucht, angeordnet ist.

14. Spritze nach einem der Ansprüche 11 bis 13, dadurch gekennzeichnet, daß die Patrone (2) in dem Adapterteil (1) durch eine axiale Drehung der Patrone (2) gegen einen Anschlag (17) in der Dreh-Vorschubrichtung des Drehkolbens (4) verriegelbar ist.

15. Spritze nach einem der Ansprüche 10 bis 14, dadurch gekennzeichnet, daß die Patrone (1) in dem Adapterteil (1) an ihrem dem Eintauchende abgewandten Ende in einer Führung geführt ist.

16. Spritze nach einem der Ansprüche 10 bis 15, dadurch gekennzeichnet, daß das Adapterteil (1) an dem Ende, an dem die Gewindestange (4) eintaucht, durch eine stirnseitige Ringkappe (21) verschlossen ist, durch die die Gewindestange (4') hindurchführt.

17. Spritze nach Anspruch 16, dadurch gekennzeichnet, daß das Adapterteil (1) aus zwei Halbschalen (19) gebildet ist.

18. Spritze nach Anspruch 17, dadurch gekennzeichnet, daß die beiden Halbschalen (19) identische Teile sind.

19. Spritze nach einem der Ansprüche 1 bis 18, dadurch gekennzeichnet, daß zwei Lagerteile (7) vorgesehen sind, bei denen es sich um identische Teile handelt.

20. Spritze nach einem der Ansprüche 1 bis 19, dadurch gekennzeichnet, daß der Innen-Stopfen (6) eine Membranfläche aufweist, gegen die das Ende des Drehkolbens (4) anliegt, wobei die Membranfläche gegen die Vorschubrichtung des Drehkolbens (4) im entlasteten Zustand vorgespannt ist.

## Claims

1. Syringe for the controlled discharge of viscous materials, in particular dental materials, having a cartridge (2) for holding the materials, into which a rotary piston (4) plunges from the one end thereof, with the rotary piston being configured at least partly in the form of a threaded rod (4') and pressing with its plunging end against an inner stopper (6), and the threaded rod thereof being movably held in a bearing, characterized in that the bearing is divided at least once in an axial direction of the threaded rod (4') into bearing parts (7), wherein the bearing parts (7) are held by at least one expanding part (11) at a distance from one another in a radial direction of the threaded rod (4') and wherein the bearing parts (7), on their surfaces facing the threaded rod (4'), have areas (9) which can be brought by external pressure into engagement with the threaded rod (4') against the resistance of the at least one expanding part (11).

2. Syringe as claimed in claim 1, characterized in that the expanding part is formed by at least one elastically deformable web (11).

3. Syringe as claimed in claim 1 or claim 2, characterized in that the expanding part (11) is formed on at least one of two opposite surfaces of two opposite bearing parts (7).

4. Syringe as claimed in one of claim s1 to 3, characterized in that the expanding part (11) communicates with the opposite surfaces of the bearing parts (7).

5. Syringe as claimed in one of claims 1 to 4, characterized in that at least two bearing parts (7) are formed which are arranged on radially opposite sides of the threaded rod (4').

6. Syringe as claimed in one of claims 1 to 5, characterized in that the expanding part (11) is formed on one side of the bearing parts (7) which faces the threaded rod (4').

7. Syringe as claimed in one of claims 1 to 6, characterized in that the expanding part (11) is held in grooves at its one end.

8. Syringe as claimed in one of claims 2 to 7, characterized in that in the axial direction at least two groups of expanding parts (11) are allocated to each bearing part (7) and are arranged in spaced apart relatonship with one another.

9. Syringe as claimed in one of claims 1 to 8, characterized in that the bearing parts (7) are movably guided in guiding means (14) in the radial direction.

10. Syringe as claimed in one of claim 1 to 9, characterized in that the bearing parts (7) are arranged in an adapter part (1) in which the cartridge (2) and the rotary piston (4) are insertable in a manner that the threaded rod (4') is passed through the bearing parts (7).

11. Syringe as claimed in claim 10, characterized in that the cartridge (2) is locked in the adapter part (1) against an axial movement.

12. Syringe as claimed in claim 11, characterized in that the cartridge (2) is locked by means of a bayonet joint (17).

13. Syringe as claimed in claim 12, characterized in that the one part (17) of the bayonet joint is arranged at the end of the cartridge (2) into which the rotary piston (4) plunges.

14. Syringe as claimed in one of claims 11 to 13, characterized in that the cartridge (2) can be locked in the adapter part (1) by an axial rotation of the cartridge (2) against a stop (17) in the rotary advance direction of the rotary piston (4).

15. Syringe as claimed in one of claims 10 to 14, characterized in that the cartridge (2) in the adapter part (1) is guided in a guiding means at its end oriented away from the plunging end.

16. Syringe as claimed in one of claims 10 to 15, characterized in that the adapter part (1), at the end on which the threaded rod (4) plunges, is closed by a ring cap (21) on an end surface through which the threaded rod (4') passes.

17. Syringe as claimed in claim 16, characterized in that the adapter part (1) is formed from two shell halves (19).

18. Syringe as claimed in claim 17, characterized in that two shell halves (19) are identical parts.

19. Syringe as claimed in one of claims 1 to 18, characterized in that two bearing parts (7) are provided which are identical parts.

20. Syringe as claimed in one of claims 1 to 19, characterized in that the inner stopper (6) comprises a membrane surface against which the end of the rotary piston (4) is abutting, wherein in the a depressurized state, the membrane surface is prestressed against a direction of forward thrust of the rotary piston (4).

## Revendications

1. Seringue de dosage de substances visqueuses, en particulier de substances dentaires, avec une cartouche (2) qui contient la substance, cartouche dans laquelle plonge un piston rotatif (4) à partir de l'une de ses extrémités, le piston rotatif étant configuré au moins partiellement comme une tige filetée (4') et appuyant, à son extrémité d'immersion, contre un bouchon intérieur (6) et sa tige filetée étant maintenue mobile dans un palier, caractérisée en ce que le palier est divisé au moins une fois dans le sens axial de la tige filetée (4') en parties de palier (7), les parties de palier (7) étant maintenues à un certain écart l'une par rapport à l'autre par au moins une pièce d'écartement (11) dans le sens radial de la tige filetée (4') et à un certain écart de la tige filetée (4') et les parties de palier (7) présentant, sur leurs surfaces tournées vers la tige filetée (4') des zones (9) qui peuvent être amenées en prise avec la tige filetée (4') par une pression extérieure contre la résistance de la pièce d'écartement (11) qui existe au moins.

2. Seringue selon la revendication 1, caractérisée en ce que la pièce d'écartement est formée par au moins une barrette (11) déformable élastiquement.

3. Seringue selon l'une des revendications 1 ou 2, caractérisée en ce que la pièce d'écartement (11) est formée sur au moins l'une de deux surfaces opposées de deux parties de palier (7) opposées.

4. Seringue selon l'une des revendications 1 à 3, caractérisée en ce que la pièce d'écartement (11) est en relation avec les surfaces opposées des parties de palier (7).

5. Seringue selon l'une des revendications 1 à 4, caractérisée en ce qu'au moins deux parties de palier (7) sont formées qui se trouvent sur des côtés opposés radialement de la tige filetée (4').

6. Seringue selon l'une des revendications 1 à 5, caractérisée en ce que la pièce d'écartement (11) est formée sur l'un des côtés des parties de palier (7) qui sont tournés vers la tige filetée (4').

7. Seringue selon l'une des revendications 1 à 6, caractérisée en ce que la pièce d'écartement (11) est maintenue dans des rainures à son extrémité.

8. Seringue selon l'une des revendications 2 à 7, caractérisée en ce que dans le sens axial au moins deux groupes de pièces d'écartement (11) sont affectés à chaque partie de palier (7) et sont placés à un certain écart l'un de l'autre.

9. Seringue selon l'une des revendications 1 à 8, caractérisée en ce que les parties de palier (7) sont guidées dans des guides (14) en étant mobiles dans le sens radial.

10. Seringue selon l'une des revendications 1 à 9, caractérisée en ce que les parties de palier (7) sont placées dans une pièce d'adaptation (1) dans laquelle la cartouche (2) et le piston rotatif (4) peuvent être insérés de telle manière que la tige filetée (4') traverse entre les parties de palier (7).

11. Seringue selon la revendication 10, caractérisée en ce que la cartouche (2) est verrouillée dans la pièce d'adaptation (1) contre la translation axiale.

12. Seringue selon la revendication 11, caractérisée en ce que la cartouche (2) est verrouillée au moyen d'une fermeture à baïonnette (17).

13. Seringue selon la revendication 12, caractérisée en ce que l'une des parties (17) de la fermeture à baïonnette est placée à l'extrémité de la cartouche (2) dans laquelle le piston rotatif (4) est plongé.

14. Seringue selon l'une des revendications 11 à 13, caractérisée en ce que la cartouche (2) dans la pièce d'adaptation (1) peut être verrouillée par une rotation axiale de la cartouche (2) contre une butée (15) dans le sens d'avancement par rotation du piston rotatif (4).

15. Seringue selon l'une des revendications 10 à 14, caractérisée en ce que la cartouche (1) dans la pièce d'adaptation (1) est guidée dans un guide à son extrémité détournée de l'extrémité d'immersion.

16. Seringue selon l'une des revendications 10 à 15, caractérisée en ce que la pièce d'adaptation (1) est fermée, à l'extrémité à laquelle la tige filetée (4) est immergée, par un capuchon annulaire (21) frontal traversé par la tige filetée (4').

17. Seringue selon la revendication 16, caractérisée en ce que la pièce d'adaptation (1) est formée par deux demi-coques (19).

18. Seringue selon la revendication 17, caractérisée en ce que les deux demi-coques (19) sont des pièces identiques.

19. Seringue selon l'une des revendications 1 à 18, caractérisée en ce que deux parties de palier (7) sont prévues pour lesquelles il s'agit de pièces identiques.

20. Seringue selon l'une des revendications 1 à 19, caractérisée en ce que le bouchon intérieur (6) présente une surface à membrane contre laquelle adhère l'extrémité du piston rotatif (4), la surface à membrane étant précontrainte contre le sens d'avancement du piston rotatif (4) à l'état détendu.
